**Europäisches Patentamt**

**European Patent Office**

**Office européen des brevets**

(19)

(11) Veröffentlichungsnummer : **0 440 609 B1**

(12)

# EUROPÄISCHE PATENTSCHRIFT

(45) Veröffentlichungstag der Patentschrift :
**14.10.92 Patentblatt 92/42**

(51) Int. Cl.⁵ : **B60R 21/00**

(21) Anmeldenummer : **89901461.7**

(22) Anmeldetag : **20.01.89**

(86) Internationale Anmeldenummer :
**PCT/DE89/00027**

(87) Internationale Veröffentlichungsnummer :
**WO 89/08036 08.09.89 Gazette 89/21**

(54) **ELEKTRONISCHE EINRICHTUNG ZUR STEUERUNG EINES INSASSENSCHUTZSYSTEMS.**

(30) Priorität : **02.03.88 DE 3806694**

(43) Veröffentlichungstag der Anmeldung :
**14.08.91 Patentblatt 91/33**

(45) Bekanntmachung des Hinweises auf die
Patenterteilung :
**14.10.92 Patentblatt 92/42**

(84) Benannte Vertragsstaaten :
**DE SE**

(56) Entgegenhaltungen :
**EP-A- 0 156 930**

(56) Entgegenhaltungen :
**DE-A- 2 151 399**
**DE-A- 3 116 867**
**DE-A- 3 621 580**
**US-A- 3 629 816**

(73) Patentinhaber : **ROBERT BOSCH GMBH**
**Postfach 30 02 20**
**W-7000 Stuttgart 30 (DE)**

(72) Erfinder : **MATTES, Bernhard**
**Querstrasse 41**
**W-7123 Sachsenheim 1 (DE)**
Erfinder : **SCHUMACHER, Hartmut**
**Abstatter Strasse 31**
**W-7000 Stuttgart 40 (DE)**

EP 0 440 609 B1

**Beschreibung**

Stand der Technik

Die Erfindung geht aus von einer elektronischen Einrichtung nach der Gattung des Anspruchs 1. Eine derartige Einrichtung ist aus der DE-A-3 621 580 bekannt. Aus der US-A-3,874,695 ist es weiter bekannt, ein Kraftfahrzeug mit einer Mehrzahl von Rückhaltemitteln auszurüsten und diese Rückhaltemittel in Abhängigkeit von der Fahrzeuggeschwindigkeit zu unterschiedlichen Zeitpunkten zu aktivieren. So wird beispielsweise bei niedrigen Geschwindigkeiten erst ein für einen Fahrgast bestimmtes Rückhaltemittel aktiviert, während das für den Fahrer bestimmte Rückhaltemittel überhaupt nicht oder erst zu einem späteren Zeitpunkt in Funktion versetzt wird. Aus der DE-A-2 151 399 ist es weiter bekannt, mehrere stoßempfindliche Anordnungen in Form von mechanisch-elektrischen Umformern mit in unterschiedliche Richtungen weisenden Empfindlichkeitsachsen an einem Fahrzeug zu befestigen.

Vorteile der Erfindung

Die Einrichtung mit den Merkmalen des Anspruchs 1 und das Verfahren mit den Merkmalen des Anspruchs 5 haben demgegenüber den Vorteil, daß abhängig von der Richtung der auf das Fahrzeug einwirkenden Kraftwirkungen bzw. Beschleunigungen tatsächlich nur dasjenige Rückhaltemittel aktiviert wird, welches im speziellen Fall zu einem Schutz der Insassen des Fahrzeuges beitragen kann. Damit wird verhindert, daß Rückhaltemittel unnötigerweise aktiviert werden, wenn sie keinen Beitrag zum Schutz der Insassen leisten können oder diese sogar gefährden könnten. So ist es beispielsweise nicht zweckmäßig, bei einem Heckaufprall einen Airbag zu aktivieren, da sich die Fahrzeuginsassen während des Heckaufpralls nicht nach vorne bewegen und somit durch den Airbag kein zusätzlicher Schutz erzielbar ist. Durch die in den Unteransprüchen aufgeführten Maßnahmen sind vorteilhafte Weiterbildungen und Ausgestaltungen der in Anspruch 1 angegebenen Erfindung möglich.

Zeichnung

Ein Ausführungsbeispiel der Erfindung ist in der Zeichnung dargestellt und in der nachfolgenden Beschreibung näher erläutert. Es zeigen Figur 1 eine elektronische Einrichtung in Form eines vereinfachten Blockdiagramms als Schutzeinrichtung für Fahrzeuginsassen, Figur 2 ein vereinfachtes Ablaufschema, Figur 3 einen Stromlaufplan der elektronischen Einrichtung, Figur 4 Diagramme mit Darstellungen von Signalverläufen bei auf das Fahrzeug einwirkenden Beschleunigungen.

Beschreibung des Ausführungsbeispiels

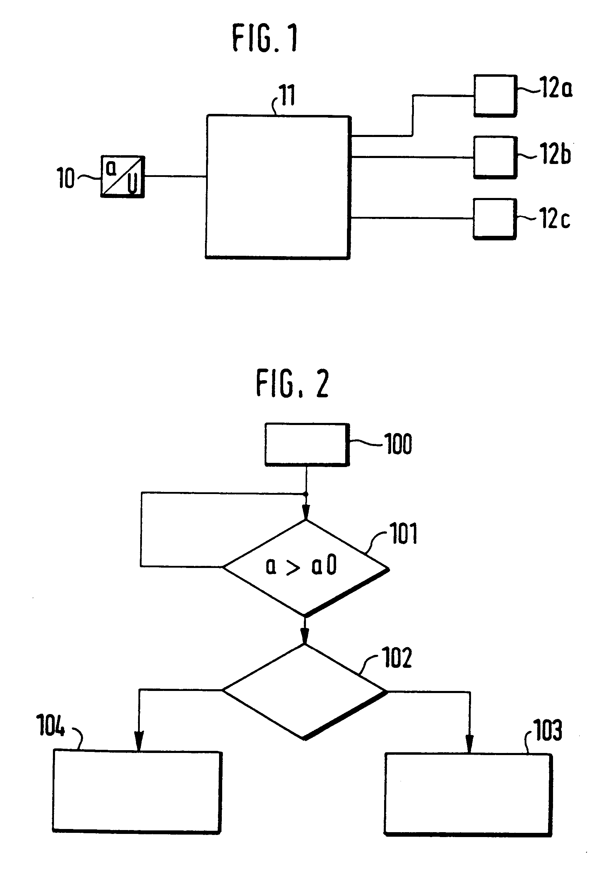

Figur 1 zeigt in Form eines vereinfachten Blockdiagramms die elektronische Einrichtung. Sie umfaßt einen Sensor 10, der mit einem Steuergerät 11 verbunden ist. Das Steuergerät 11 wiederum ist mit mehreren Rückhaltemitteln 12a, 12b, 12c verbunden. Bei diesen Rückhaltemitteln handelt es sich um Airbags und/oder Gurtstraffer für den Fahrer eines Fahrzeugs und weitere Fahrzeuginsassen. Unter Airbag versteht man einen mit Gasdruck aufblasbaren Schutzsack, der sich vor dem Fahrer oder Fahrzeuginsassen entfaltet und dadurch einen zu Verletzungen führenden Aufprall auf harte Fahrzeugteile verhindert.

Bei dem Sensor 10 handelt es sich vorzugsweise um einen piezoelektrischen Beschleunigungsaufnehmer, der bei Auftreten einer Beschleunigung ein Spannungssignal abgibt. Dieses Signal wird dem Steuergerät 11 zugeführt, das dieses Signal des Sensors 10 auswertet und erforderlichenfalls die Rückhaltemittel 12a, 12b, 12c ansteuert, um diese auszulösen. Das Steuergerät 11 umfaßt Mittel zur Unterscheidung verschiedener Aufprallarten. In einer einfachen Fallgestaltung kann das Steuergerät 11 deshalb zwischen einem Frontalaufprall und einem Heckaufprall unterscheiden, um dann zu entscheiden, welche Arten der Rückhaltemittel 12a, 12b, 12c ausgelöst werden. Bei einem anderen Ausführungsbeispiel der Erfindung könnte auch zwischen Frontalaufprall, Heckaufprall und Aufprall auf eine Seite des Fahrzeuges unterschieden werden.

Figur 2 zeigt ein vereinfachtes Ablaufschema zur Erläuterung des Funktionsablaufs in der elektronischen Einrichtung. Im Ablaufschritt 100 wird die Einrichtung eingeschaltet. Nach dem Einschalten wird im Ablaufschritt 101 ständig überprüft, ob die Beschleunigung a einen Grenzwert a0 erreicht hat oder nicht. Sofern der Grenzwert a0 erreicht ist, wird im Ablaufschritt 102 weiter geprüft, ob das Kriterium eines Heckaufpralls vorliegt oder nicht. Sofern ein Heckaufprall vorliegt, wird gemäß Ablaufschritt 103 entschieden, das Rückhaltemittel Airbag nicht zu aktivieren, da dieses nicht zum Schutz der Fahrzeuginsassen beitragen kann. Sofern jedoch kein Heckaufprall vorliegt, wird gemäß Ablaufschritt 104 auch das Rückhaltemittel Airbag aktiviert.

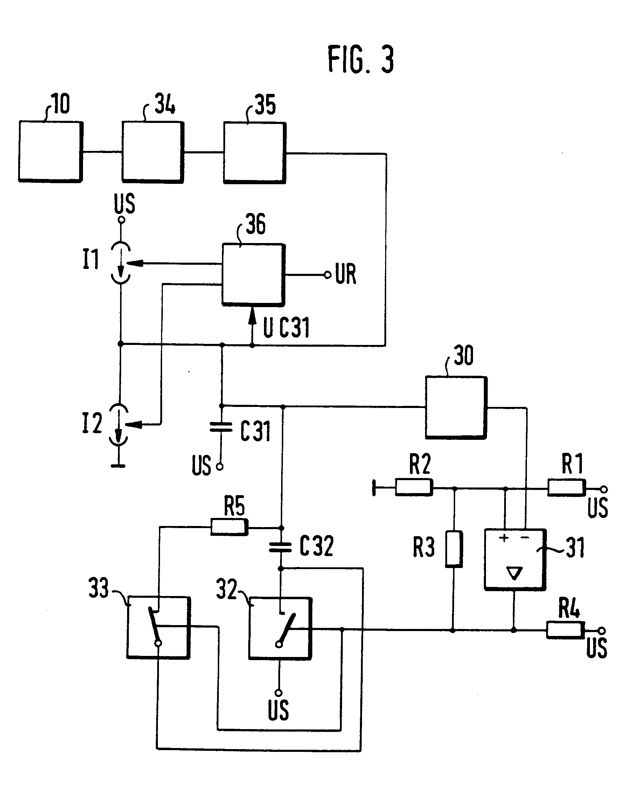

Figur 3 zeigt als Ausführungsbeispiel einen Stromlaufplan der elektronischen Einrichtung und zwar im wesentlichen der Teile 10 und 11 der Einrichtung. Der Sensor 10 ist mit einem Integrator 34 verbunden, dessen Ausgangsanschluß einem Begrenzer 35 zugeführt ist. Der Ausgangsanschluß des Begrenzers 35 ist einerseits mit dem Verbindungspunkt zweier Stromquellen $I_1$, $I_2$ verbunden, wobei der zweite Anschluß der Stromquelle $I_2$ an Masse und der zweite Anschluß der Stromquelle $I_1$ an die Betriebsspannung US gelegt ist. Andererseits ist der Ausgang des Begrenzers 35 mit einem Anschluß des Integrationskondensators C31 verbunden, dessen zweiter Anschluß ebenfalls mit der Betriebsspannung US verbunden ist. Weiter ist ein die Stromquellen $I_1$, $I_2$ steuernder Regler 36 vorgesehen, dem über Eingangsanschlüsse eine Referenzspannung $U_R$ und die Spannung $U_{C31}$ des Integrationskondensators C31 zugeführt sind. Mit dem der Betriebsspannungsquelle US abgewandten Anschluß des Integrationskondensators C31 ist der Eingang eines Impedanzwandlers 30 verbunden, dessen Ausgangsanschluß an den invertierenden Eingang eines Komparators 31 geführt ist. Der nicht invertierende Eingang des Komparators 31 ist an den Abgriff eines Spannungsteilers R1, R2 gelegt, der zwischen den Masseanschluß und die Betriebsspannnung US geschaltet ist. Ebenfalls an den Abgriff des Spannungsteilers R1, R2 ist ein Anschluß eines Widerstandes R3 geführt, dessen zweiter Anschluß mit dem Ausgangsanschluß des Komparators 31 verbunden ist, der über einen Widerstand R4 an die Betriebsspannung US gelegt ist. Vom Ausgangsanschluß des Komparators 31 sind zwei Schalter 32, 33 steuerbar. Ein Anschluß des Schalters 32 ist über einen Kondensator 32 mit dem Eingangsanschluß des Impedanzwandlers 30 verbunden. Der zweite Anschluß des Schalters 32 ist an die Betriebsspannung US gelegt. Der erste Anschluß des Schalters 33 dagegen ist über einen Widerstand R5 mit dem Eingangsanschluß des Impedanzwandlers 30 verbunden, während der zweite Anschluß des Schalters 33 an den ersten Anschluß des Schalters 32 geführt ist, der über den Kondensator C32 mit dem Eingangsanschluß des Impedanzwandlers 30 verbunden ist. Schalter 32 umfaßt einen Arbeitskontakt, während Schalter 33 als Ruhekontakt ausgebildet ist.

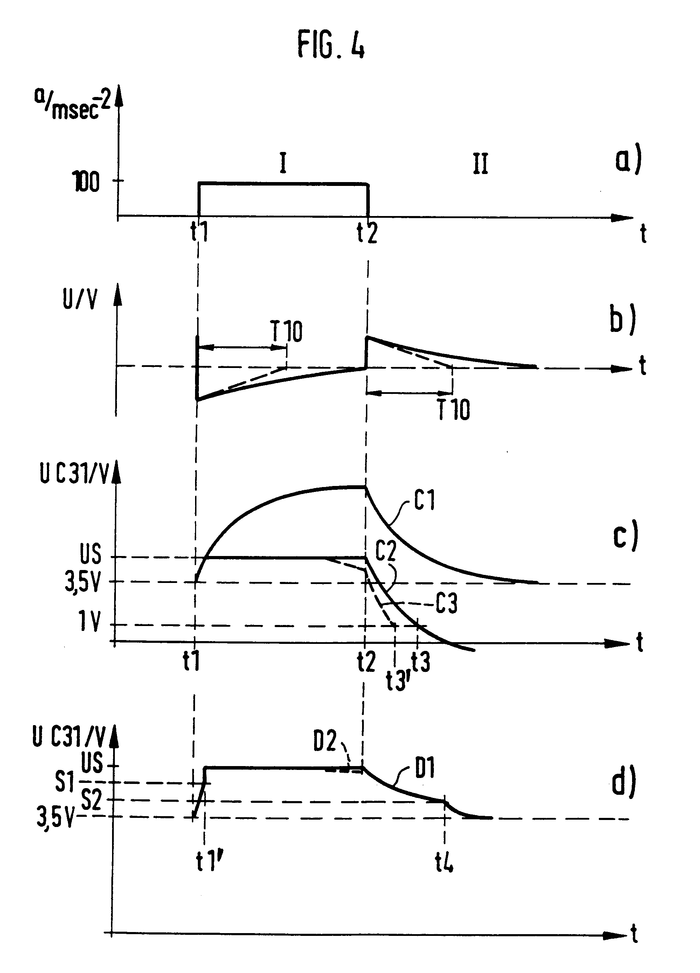

Die Wirkungsweise der elektronischen Einrichtung wird anhand der in Figur 4 dargestellten Diagramme erläutert, in der Impulsformen als Funktion der Zeit abgebildet sind. Alle Diagramme Figur 4a bis Figur 4d zeigen bestimmte Signalformen in zwei Zeitbereichen I und II. Der Zeitbereich I entspricht dabei dem Zeitintervall t1, t2, in dem gemäß Diagramm a eine Verzögerungskraft auf das Fahrzeug einwirkt und ein hier in Idealform dargestellter Beschleunigungsbzw. Verzögerungsimpuls auf den Sensor 10 einwirkt. Die auf den Sensor 10 einwirkende Beschleunigung ist im Diagramm a als Rechtecksignal dargestellt, das zum Zeitpunkt t1 beginnt und zum Zeitpunkt t2 endet. Im Diagramm b ist das Ausgangssignal des Sensors 10 als Antwort auf den Beschleunigungsimpuls gemäß Diagramm a dargestellt. Für die Form des Kurvenverlaufs ist die Grenzfrequenz des Sensors 10 verantwortlich; mit T10 ist die Hochpaßzeitkonstante des Sensors 10 bezeichnet.

Im Zeitbereich I wird entsprechend dem physikalischen Ablauf des Heckaufpralls vom Sensor 10 ein einer Beschleunigung entsprechendes Signal abgegeben, wie im Diagramm b dargestellt. Im Diagramm c ist die Ausgangsspannung des Integrators 34 als Antwort auf das Ausgangssignal des Sensors 10 gemäß Diagramm b dargestellt. Die Integrationskurve C1 steigt, beginnend vom Ruhepegel bei etwa 3,5 Volt, entgegengesetzt zur Auslöserichtung an. Im Zeitbereich II zeigt das im Diagramm b dargestellte Ausgangssignal des Sensors 10 eine Verzögerung an. Wenn man nun in der Lage wäre, den für eine ungestörte Integration notwendigen Spannungsbereich bereitzustellen, so käme es auch im Zeitbereich II und infolge der gemäß dem Diagramm b dargestellten Verzögerung nicht zu einer Auslösung der Rückhaltemittel durch die elektronische Einrichtung. Die Spannung $U_{C31}$ am Intgegrationskondensator C31 würde in diesem Fall der im Diagramm c dargestellten Kurve C1 folgen. Damit jedoch der Integrationsvorgang in Auslöserichtung mit hoher Genauigkeit ablaufen kann, muß für diesen Integrationsbereich 50 % und mehr der verfügbaren stabilisierten Versorgungsspannung vorgesehen werden. Derartige elektronische Einrichtungen weisen jedoch bei einem Heckaufprall einen Integrationsverlauf auf, der günstigstenfalls der Kurve C2 nach Diagramm c folgt. Allenfalls kann bei Vorhandensein einer internen Beschleunigungsschwelle ein Verlauf der Integrationskurve nach der in Diagramm C gestrichelt gezeichneten Kurve C3 erreicht werden. Beim Übergang vom Zeitbereich I zum Zeitbereich II kommt es zum Zeitpunkt t3 oder t3' zur Auslösung der Rückhaltemittel durch die elektronische Einrichtung. In der praktischen Anwendung ist jedoch eine Integrationskurve gemäß dem Kurvenverlauf C1 nach Diagramm c nicht zu realisieren, da hierfür der 5- bis 10-fache Spannungswert im Vergleich zu den Spannungswerten bei einem Frontalaufprall zur Verfügung stehen müßte. Im letztgenannten Fall würden etwa Spannungswerte in der Größenordnung von 10 bis 20 Volt auftreten. Durch die Schaltungsanordnung nach Figur 3 wird nun über den Impedanzwandler 30 die am Integrationskondensator C31 anstehende Spannung $U_{C31}$ beobachtet. Überschreitet diese Spannung die durch die Widerstandskombination R1, R2, R3, R4 eingestellte Schwelle S1 im Diagramm d, so wird auf das Vorliegen eines Heckaufpralls geschlossen. Über den Komparator 31 wird der Schalter 32 geschlossen, während Schalter 33 geöffnet wird. Dadurch wird gemäß Diagramm d zum Zeitpunkt t1' die Spannung am Integrationskondensator C31 auf den Wert US angehoben. Die Spannung am Integrationskondensator C31 verbleibt auf dem Wert US und fällt aufgrund der vorhandenen internen Stromquelle I2 (Beschleunigungsschwelle) erst am Ende des Zeitbereiches I gemäß der im Diagramm d gestrichelt gezeichneten Kurve D2 leicht ab. Durch das Parallelschalten des Kondensators C32 zum Integrationskondensator C31 zum Zeitpunkt t1' erfolgt die Abintegration im Zeitbereich II gemäß Kurve D1 im Diagramm d und zwar mit einem Integrationskoeffizienten, der durch die Parallelschaltung der Kondensatoren C31, C32 bestimmt ist. Durch den Widerstand R3 wird im Zusammenhang mit dem Komparator 31 eine Schwelle S2 für die Spannung $U_{31}$ am Integrationskondensator C31 definiert, welche für Spannungswerte $U_{C31}$ unterhalb der Schwelle S2 durch den Komparator 31 die Abschaltung des Kondensators C32 durch Öffnen des Schalters 32 und Schließen des Schalters 33 bewirkt. Durch die Veränderung des Integrationskoeffizienten durch Parallelschaltung des Kondensators C32 kann die Auslösung der Rückhaltemittel bei einem Heckaufprall vermieden werden, wobei nach Abschaltung des Kondensators C32 im Zeitpunkt t4 (vgl. Diagramm d) die Einrichtung wieder mit der für einen Frontalaufprall optimierten Integrationszeit arbeitet. Eine nachteilige Einwirkung auf das Auslöseverhalten der Rückhaltemittel bei einem Frontalaufprall ist nicht zu beobachten. Bekannte elektronische Einrichtungen mit Quarzsensoren oder piezoelektrischen Sensoren für die Aufnahme der Beschleunigung weisen keinen besonderen Schutz gegen eine unerwünschte Auslösung im Fall eines Heckaufpralles auf. Gegenüber anderen denkbaren Maßnahmen, wie etwa die Verwendung eines Sensors mit extrem tiefer unterer Grenzfrequenz, die technologisch nur sehr schwer zu erreichen ist, sowie der Bereitstellung eines großen Spannungsbereiches zur Integration, ist der zuvor beschriebene Schutz gegen ein unerwünschtes Auslösen bei einem Heckaufprall mit relativ einfachen Schaltungsmitteln und dennoch hoher Genauigkeit realisierbar. Außerdem läßt sich durch einfaches Variieren der aus dem Diagramm d ersichtlichen Schaltschwellen S1 und S2 sowie durch Anpassung des Integrationskoeffizienten mittels Auswahl eines besonders geeigneten Wertes für den Kondensator C32 die Schutzfunktion gegen unerwünschtes Auslösen bei einem Heckaufprall optimal an bestimmte Fahrzeugverhältnisse anpassen, die z.B. aufgrund mathematischer Simulationen ermittelt werden können.

**Patentansprüche**

1. Elektronische Einrichtung zum Auslösen von Insassenschutzsystemen mit einem Beschleunigungssensor (10), mit einem Steuergerät (11) zur Auswertung des Sensorsignales, sowie mit von dem Steuergerät (11) im Gefahrenfall auslösbaren Rückhaltemitteln (12a, 12b, 12c), wie Airbag, Gurtstraffer oder dgl., wobei das Steuergerät (11) Mittel zur Feststellung der Richtung der auf das Fahrzeug einwirkenden Beschleunigung umfaßt, dadurch gekennzeichnet, daß das Steuergerät (11) einen Integrator (34) mit einem ersten Integrationskondensator (C31) zur Integration des Ausgangssignales des Sensors (10) umfaßt, daß weiter Auswerte- und Schaltmittel vorgesehen sind, zur Überprüfung der an dem ersten Integrationskondensator (C31) liegenden Spannung ($U_{C31}$) und zur Parallelschaltung eines zweiten Kondensators (C32) zu dem ersten Integrationskondensator (C31), sofern die Spannung an dem ersten Integrationskondensator (C31) einen vorgebbaren Schwellwert (S1) überschreitet, um eine Auslösung derjenigen Rückhaltemittel zu verhindern, die bei der festgestellten Beschleunigungsrichtung Keinen Beitrag zum Schutz der Insassen leisten können.

2. Einrichtung nach Anspruch 1, dadurch gekennzeichnet, daß die Auswerte- und Schaltmittel einen Komparator (31) umfassen, an dessen invertierenden Eingang die an dem ersten Integrationskondensator (C31) anstehende Integrationsspannung anlegbar ist, an dessen nicht invertierenden Eingang eine über einen zwischen Masse und Betriebsspannung (US) geschalteten Spannungsteiler abgeleitete Referenzspannung liegt und über dessen Ausgang zwei Schalter (32, 33) ansteuerbar sind, die, je nach ihrer Schaltstellung, den zweiten Kondensator (C32) parallel zu dem ersten Integrationskondensator (C31) schalten oder nicht.

3. Einrichtung nach einem der Ansprüche 1 bis 2, dadurch gekennzeichnet, daß die Spannung am ersten Integrationskondensator (C31) über einen Impedanzwandler (30) an den invertierenden Eingang des Komparators (31) legbar ist.

4. Betriebsverfahren für eine Einrichtung zum Auslösen von Insassenschutzsystemen mit einem Beschleunigungssensor (10), mit einem Steuergerät (11) zur Auswertung des Sensorsignales, sowie mit von dem Steuergerät (11) im Gefahrenfall auslösbaren Rückhaltemitteln (12a, 12b, 12c), wie Airbag, Gurtstraffer oder dergleichen, wobei das Steuergerät (11) Mittel zur Feststellung der Richtung der auf das Fahrzeug einwirkenden Beschleunigung umfaßt, nach einem der Ansprüche 1 bis 3, dadurch gekennzeichnet, daß abhängig von der festgestellten Richtung der Beschleunigung die Aktivierung derjenigen Rückhaltemittel (12a, 12b, 12c) verhindert wird, die keinen Beitrag zum Schutz der Insassen leisten können

5. Verfahren nach Anspruch 4, dadurch gekennzeichnet, daß eine auf das Fahrzeug einwirkende Beschleunigung von einem Sensor (10) erfaßt wird, daß das Ausgangssignal des Sensors (10) einer Integrationseinrichtung (34) mit einem ersten Integrationskondensator (C31) zugeführt wird, daß die am ersten Integrationskondensator (C31) anstehende Spannung ($U_{C31}$) einem ersten Eingang eines Komparators (31) zugeführt wird, an dessen zweitem Eingang eine Referenzspannung anliegt, und daß bei Überschreiten eines vorgebbaren Spannungsschwellwertes (S1) durch die Integratorspannung ($U_{C31}$) vom Ausgang des Komparators (31) Schalter (32, 33) angesteuert werden, die einen zweiten Kondensator (C32) parallel zum ersten Integrationskondensator (C31) schalten.

## Claims

1. Electronic device for triggering occupant protection systems, having an acceleration sensor (10), a control device (11) for evaluating the sensor signal, and restraining means (12a, 12b, 12c), such as air bag, belt tensioner or the like, which can be triggered by the control device (11) in the event of danger, the control device (11) comprising means for determining the direction of the acceleration acting on the vehicle, characterised in that the control device (11) comprises an integrator (34) having a first integration capacitor (C31) for integrating the output signal of the sensor (10), and in that, furthermore, evaluating and switching means are provided for checking the voltage ($U_{C31}$) across the first integration capacitor (C31) and for connecting a second capacitor (C32) in parallel to the first integration capacitor (C31) if the voltage at the first integration capacitor (C31) exceeds a prescribable threshold value (S1) in order to prevent triggering of those restraining means which cannot contribute to protecting the occupants given the acceleration direction determined.

2. Device according to Claim 1, characterised in that the evaluating and switching means comprise a comparator (31) to whose inverting input it is possible to apply the integration voltage present at the first integration capacitor (C31), at whose non-inverting input there is a reference voltage derived via a voltage divider connected between earth and operating voltage (US), and via whose output it is possible to control two switches (32, 33) which depending on their switching position do or do not switch the second capacitor (C32) parallel to the first integration capacitor (C31).

3. Device according to one of Claims 1 to 2, characterised in that the voltage at the first integration capacitor (C31) can be applied via an impedance transformer (30) to the inverting input of the comparator (31).

4. Operating method for a device for triggering occupant protection systems, having an acceleration sensor (10), a control device (11) for evaluating the sensor signal, and restraining means (12a, 12b, 12c), such as air bag, belt tensioner or the like, which can be triggered by the control device (11) in the event of danger, the control device (11) comprising means for determining the direction of the acceleration acting on the vehicle, according to one of Claims 1 to 3, characterised in that depending on the acceleration direction determined the activation of those restraining means (12a, 12b, 12c) is prevented which cannot contribute to protecting the occupants.

5. Method according to Claim 4, characterised in that an acceleration acting on the vehicle is detected by a sensor (10), in that the output signal of the sensor (10) is fed to an integration device (34) having a first integration capacitor (C31), in that the voltage ($U_{C31}$) present at the first integration capacitor (C31) is fed to a first input of a comparator (31) at whose second input a reference voltage is applied, and in that when a prescribable voltage threshold value (S1) is exceeded by the integrator voltage ($U_{C31}$) switches (32, 33) are controlled by the output of the comparator (31) which switch a second capacitor (C32) parallel to the first integration capacitor (C31).

## Revendications

1°) Dispositif électronique pour déclencher des systèmes de protection des passagers avec un détecteur d'accélération (10), avec un appareil de commande (11) pour l'exploitation des signaux du détecteur, ainsi qu'avec des moyens de protection (12a, 12b, 12c) pouvant être déclenchés en cas de danger par l'appareil de commande (11), tels que coussin d'air, lanière de ceinture ou analogues, l'appareil de commande (11) comprenant des moyens pour déterminer le sens de l'accélération agissant sur le véhicule, dispositif caractérisé en ce que l'appareil de commande (11) comprend un intégrateur (34) avec un premier condensateur d'intégration (C31) pour l'intégration du signal de sortie du détecteur (10), en ce que d'autres moyens d'exploitation et de commutation sont prévus, pour contrôler la tension ($U_{C31}$) du premier condensateur d'intégration (C31) et pour monter en parallèle un deuxième condensateur (C32) par rapport au premier condensateur d'intégration (C31), si la tension sur le premier condensateur d'intégration (C31) dépasse une valeur de seuil (S1) prédéfinie, pour éviter un déclenchement des moyens de protection qui dans le cas du sens d'accélération déterminé, ne pourraient pas contribuer à la protection des passagers.

2°) Dispositif selon la revendication 1, caractérisé en ce que les moyens d'exploitation et de commutation comprennent un comparateur (31) dont l'entrée d'inversion reçoit la tension d'intégration existant sur le premier condensateur d'intégration (C31) et dont l'entrée de non-inversion est à une tension de référence fournie par un diviseur de tension monté entre la masse et la tension de fonctionnement (US) et dont la sortie peut commander deux interrupteurs (32, 33) qui, selon leur position de commutation, mettent en parallèle ou non le second condensateur (C32) avec le premier condensateur d'intégration (C31).

3°) Dispositif selon l'une des revendications 1 à 2, caractérisé en ce que la tension peut être appliquée sur le premier condensateur d'intégration (C31) par l'intermédiaire d'un transformateur d'adaptation d'impédance (30) à l'entrée d'inversion du comparateur (31).

4°) Procédé de fonctionnement pour un dispositif servant à déclencher des systèmes de protection des passagers avec un détecteur d'accélération (10), un appareil de commande (11) pour l'exploitation du signal du détecteur, ainsi que des moyens de protection (12a, 12b, 12c) pouvant être déclenchés en cas de danger, par l'appareil de commande (11), moyens tels qu'un coussin d'air, une lanière de ceinture, ou analogues, l'appareil de commande (11) comprenant des moyens pour déterminer le sens de l'accélération agissant sur le véhicule, selon l'une des revendications 1 à 3, procédé caractérisé en ce qu'en fonction du sens déterminé de l'accélération, on empêche l'activation des moyens de protection (12a, 12b, 12c), qui ne peuvent pas contribuer à la protection des passagers.

5°) Procédé selon la revendication 4, caractérisé en ce que l'on détecte une accélération agissant sur le véhicule au moyen d'un détecteur (10), on applique le signal de sortie du détecteur (10) à un dispositif d'intégration (34) avec un premier condensateur d'intégration (C31), la tension ($U_{C31}$) existant sur le premier condensateur d'intégration (C31) est amenée à une première entrée d'un comparateur (31), sur la deuxième entrée duquel se trouve une tension de référence, et dans le cas où une valeur de seuil de tension (S1) est dépassée par la tension d'intégration ($U_{C31}$) à partir de la sortie du comparateur (31) sont commandés des interrupteurs (32, 33), qui mettent en parallèle un deuxième condensateur (C32) par rapport au premier condensateur d'intégration (C31).

# FIG. 1

# FIG. 2

# FIG. 3

# FIG. 4